# EUROPÄISCHE PATENTSCHRIFT

(11) **EP 2 982 528 B1**
(45) Veröffentlichungstag und Bekanntmachung des Hinweises auf die Patenterteilung: **01.11.2017**
(21) Anmeldenummer: 15001677.2
(22) Anmeldetag: 05.06.2015
(51) Int. Cl.: B60G 9/00, B60G 7/00, B60G 11/30

(54) **ACHSAUFHÄNGUNG FÜR GELENKTE STARRACHSEN IN FAHRZEUGEN, INSBESONDERE NUTZFAHRZEUGE**
AXLE SUSPENSION FOR STEERED RIGID AXLES IN VEHICLES, ESPECIALLY COMMERCIAL VEHICLES
SUSPENSION D'ESSIEUX RIGIDES À ROUES DIRECTRICES DE VÉHICULES, EN PARTICULIER VÉHICULES UTILITAIRES

(30) Priorität: 09.08.2014 DE 102014011859
(43) Veröffentlichungstag der Anmeldung: 10.02.2016
(73) Patentinhaber: MAN Truck & Bus AG, 80995 München (DE)
(72) Erfinder: Ziehlke, Jürgen, 85416 Langenbach (DE); Mendler, Hardy, 85221 Dachau (DE); Kreisel, Markus, 86495 Eurasburg (DE)
(74) Vertreter: v. Bezold & Partner Patentanwälte - PartG mbB

(56) Entgegenhaltungen:
- EP-A1- 2 684 714
- WO-A1-99/58354
- WO-A1-2006/067551
- DE-A1- 1 780 082
- DE-A1- 19 521 874
- DE-A1-102004 014 610
- DE-A1-102007 022 411
- FR-A- 768 876
- JP-A- H0 399 915
- JP-A- 2002 144 838
- US-A- 5 711 544
- US-A- 5 718 445
- US-A- 6 135 470
- US-A1- 2004 056 446
- US-A1- 2004 188 973

## Beschreibung

Die Erfindung betrifft einen Vierpunktlenker und eine Achsaufhängung für gelenkte Starrachsen in Fahrzeugen, insbesondere in Nutzfahrzeugen.

Es werden vielfach Achsaufhängungen für Nutzfahrzeuge eingesetzt, die aus einer Achsführung durch an beiden Fahrzeugseiten angeordnete Längslenker, die einerseits an der Fahrzeugachse und andererseits am Fahrzeugaufbau angelenkt sind, und einem in der Fahrzeugmitte mit einem Zentralgelenk an der Fahrzeugachse verankerten und mit den Enden seiner beiden Streben andererseits am Fahrzeugaufbau angelenkten Dreieckslenker gebildet werden. Zur Stabilisierung ist ferner ein im Allgemeinen U-förmiger Stabilisatorstab vorgesehen.

Nachteilig an diesen bekannten Achsaufhängungen sind der Bauraumbedarf für die Anordnung des Stabilisatorstabes und die kostenaufwändige Gestaltung der Achsaufhängung.

Eine vereinfachte Achsaufhängung für Starrachsen ist aus der DE A 195 21 874 A1 bekannt. Die vorgeschlagene Achsaufhängung weist einen Vierpunktlenker auf, bestehend aus zwei stabilen Gelenkarmen, die durch ein Flächentragwerk fest miteinander verbunden sind, wobei letzteres verwindbar mit definierter Kennlinie der Verwindung ausgeführt ist. Hierbei sind die Gelenkverbindungen der Längslenker unterhalb der Fahrzeugachse angeordnet, während der Vierpunktlenker oberhalb der Fahrzeugachse und damit auch oberhalb der Längslenker angeordnet ist. Zwar ist mit diesem Vierpunktlenker kein gesonderter Bauraum für die Lagerung eines Stabilisatorstabs mehr erforderlich; dennoch erschwert der erforderliche Bauraum dieser Achsaufhängung deren Anordnung insbesondere bei einer gelenkten Vorderstarrachse eines Nutzfahrzeugs, da dort der verfügbare Bauraum aufgrund von Motorkomponenten und anderen Bauteilen besonders beschränkt ist. Ferner ist der beschriebene Vierpunktlenker aufgrund des Flächentragwerks festigkeitstechnisch nur schwer zu beherrschen, so dass sich keine optimale Wankstabilität damit erzielen lässt.

Aus der US 2004/0188973 A1 ist eine Achsaufhängung bekannt, aufweisend einen Vierpunktlenker und zwei Längslenker. Eine ähnliche Achsaufhängung ist bekannt aus der US 6,135,470 A. Aus der WO 2006/067551 A1 ist eine weitere Achsaufhängung bekannt, bei der ein Vierpunktlenker mit einem Stabilisatorstab kombiniert ist. Aus der US 5,718,445 A ist ein Fahrzeugaufhängungssystem bekannt, aufweisend ein Paar von Steuerarmen und einen dazwischen angeordneten Torsionsstab. Aus der JP 2002 144838 A ist ein Luftfedersystem bekannt, bei dem in einer Stabilisatorvorrichtung ein Tank untergebracht ist, um Luftfedern zu versorgen.

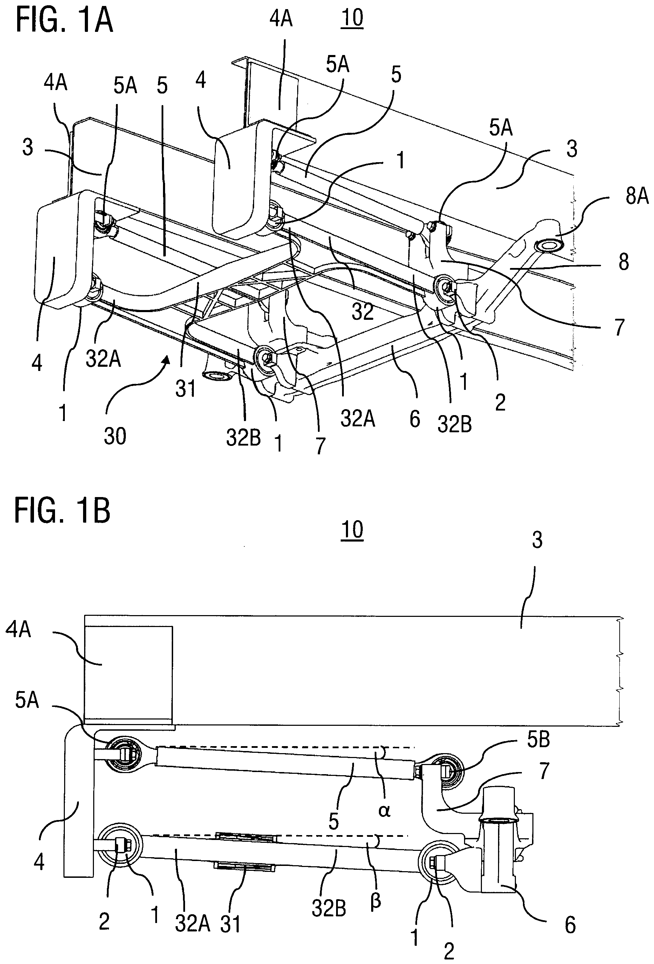

Es ist somit eine Aufgabe der Erfindung, eine verbesserte Achsaufhängung bereitzustellen, mit der Nachteile herkömmlicher Achsaufhängungen vermieden werden können. Der Erfindung liegt insbesondere die Aufgabe einer einfacheren, raum- und kostensparenderen Gestaltung einer solchen Achsaufhängung zugrunde, die eine sichere Fahrzeuglängs- und Fahrzeugquerführung und Fahrzeugstabilisierung ermöglicht.
Diese Aufgaben werden durch eine Achsaufhängung mit den Merkmalen des Hauptanspruchs sowie durch einen Vierpunktlenker gemäß den Merkmalen des nebengeordneten Anspruchs gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren 1A-1C, 2A, 2B, 10 und 11 näher erläutert. Die erfindungsgemäße Achsaufhängung für gelenkte Starrachsen in Fahrzeugen, insbesondere in Nutzfahrzeugen, weist in Übereinstimmung mit dem Stand der Technik zwei beidseits der Längsachse des Fahrzeugs angeordnete und sich in Längsrichtung des Fahrzeuges erstreckende, die gelenkte Starrachse mit dem Fahrzeugaufbau vertikal beweglich verbindende Längslenker auf. Die beiden Längslenker sind vorzugsweise im Wesentlichen auf gleicher Höhe angeordnet, können aber auch in Vertikal Richtung versetzt zueinander angeordnet sein.
Ferner umfasst die Achsaufhängung einen Vierpunktlenker, der einerseits gelenkig mit der Starrachse und andererseits gelenkig mit dem Fahrzeugaufbau verbunden ist. Die Längslenker dienen zur Fahrzeuglängsführung, während der Vierpunktlenker die Funktionen der Fahrzeuglängs-/Fahrzeugquerführung und der Fahrzeugstabilisierung übernimmt.
Gemäß allgemeinen Gesichtspunkten der Erfindung sind der Vierpunktlenker und die Längslenker unterhalb des Fahrzeugaufbaus angeordnet, beispielsweise unterhalb eines Fahrzeugrahmens und/oder unterhalb der Fahrzeugrahmenlängsträger. Ferner ist der Vierpunktlenker unterhalb der Längslenker angeordnet. Die Lenkeraufnahmen des Vierpunktlenkers können dabei planparallel zueinander ausgerichtet sein, dies ist aber nicht zwingend.
Ein besonderer Vorzug der vorliegenden Erfindung liegt somit darin, dass durch den Einsatz des unteren Vierpunktlenkers der Panhardstab samt Anbindung entfallen kann. Durch den Entfall des Panhardstabs entfällt auch die Fahrzeugquerbeschleunigung bei einer Federbewegung. Ein weiterer Vorteil der erfindungsgemäßen Achsaufhängung ist, dass die Achsaufhängung zwischen den Fahrzeugrahmenlängsträgern und unterhalb der Fahrzeugrahmenlängsträger auf Höhe der Längslenker keinen Bauraum beansprucht, so dass dieser Bauraum für die Anordnung anderer Fahrzeugkomponenten genutzt werden kann.

Besonders vorteilhaft ist eine Ausgestaltung der gelenkten Starrachse als luftgefederte Vorderachse, da die wenig Bauraum beanspruchende Achsaufhängung mehr Raum zur Anordnung des Motors und anderer Komponenten an der luftgefederten Vorderachse bietet.

Die gelenkte Starrachse kann auch als Nachlaufachse oder als Vorlaufachse eines Nutzfahrzeugs ausgebildet sein.

Gemäß einer vorteilhaften Ausgestaltungsform umfasst der Vierpunktlenker der Achsaufhängung ein im eingebauten Zustand des Vierpunktlenkers sich senkrecht zur Fahrzeuglängsrichtung erstreckendes Mittelteil, an dessen beiden Enden je ein erster Lenkerarm und ein zweiter Lenkerarm fest mit dem Mittelteil verbunden sind, wobei die zwei ersten Lenkerarme gelenkig mit dem Fahrzeugaufbau und die zwei zweiten Lenkerarme gelenkig mit der Starrachse verbunden sind. Im Rahmen der Erfindung besteht die Möglichkeit, dass sich diese vier Lenkerarme von dem Zentralbereich unter Ausbildung eines Kreuzes oder einer H-förmigen Struktur wegerstrecken. Das Mittelteil kann mittig zu den Lenkerarmen angeordnet sein, so dass jeweils zwei Hälften eines Lenkerarms, die auf gegenüberliegenden Seiten des Mittelteils liegen, im Wesentlichen gleich lang sind. Das Mittelteil kann aber auch versetzt zur der Mitte der Lenkerarme angeordnet sein, so dass die auf gegenüberliegenden Seiten des Mittelteils liegenden Teile der Lenkerarme verschieden lang sind. Gemäß einem bevorzugten Ausführungsbeispiel bilden die Längslenker und die Lenkerarme des Vierpunktlenkers einen im Wesentlichen gleich großen Winkel zu einem Fahrzeugrahmenlängsträger des Fahrzeugaufbaus bzw. verlaufen die Längslenker im Wesentlichen parallel zu unterhalb angeordneten Lenkerarmen des Vierpunktlenkers. Der Winkel zu dem Fahrzeuglängsträger ändert sich im Fahrbetrieb natürlich aufgrund der gelenkigen Aufhängung, jedoch bleiben die Längslenker und die Lenkerarme des Vierpunktlenkers gemäß dieser Variante in einer Seitenansicht im Wesentlichen parallel zueinander ausgerichtet.

Bei einer weiteren Variante dieser Ausgestaltungsform sind die Längslenker so angelenkt, dass sich eine Pfeilung nach vorne in Fahrtrichtung oder in entgegengesetzter Richtung ausbildet, so dass die Längslenker in Querrichtung, d. h. senkrecht zur Fahrzeuglängsachse, mit den Lenkerarmen einen spitzen Winkel ausbilden. Ein Vorteil dieser Variante ist, dass dadurch auftretende Querkräfte besser abgefangen werden können.

Nachfolgend werden unterschiedliche Ausführungsvarianten des Vierpunktlenkers beschrieben, die als Vierpunktlenker in der erfindungsgemäßen Achsaufhängung besonders vorteilhaft sind, da die jeweiligen Vierpunktlenker besonders kostensparend herstellbar sind, baulich kompakt ausgeführt sind und/oder eine besonders sichere und stabile Funktionsweise der Achsaufhängung ermöglichen.
Besonders vorteilhaft ist eine Ausbildung des Vierpunktlenkers, bei der sich die Lenkerarme vom dem Mittelteil unter Ausbildung einer H-förmigen Struktur wegerstrecken. Dabei kann das Mittelteil stabförmig, zylinderförmig, stangenförmig, rohrförmig oder als Profilstück ausgeführt sein. Das Mittelteil ist insbesondere tordierbar, d. h. verwindbar ausgeführt, wobei die Torsionseigenschaften durch den Fertigungsprozess vorteilhaft vorgegeben werden können. Das Mittelteil und/oder die Lenkerarme können ferner gekröpft ausgeführt sein. Mit einer gekröpften Ausführung kann der Platzbedarf an den vorhandenen Bauraum angepasst werden. Der Vierpunktlenker kann mehrteilig ausgeführt sein. Beispielsweise kann das Mittelteil stoffschlüssig mit den Lenkerarmen verbunden sein, vorzugsweise durch Kleben oder Schweißen.
Eine weitere Möglichkeit der erfindungsgemäßen Realisierung sieht vor, dass das Mittelteil über eine formschlüssige Verbindung, vorzugsweise eine Verzahnung, mit den Lenkerarmen verbunden ist, wobei die formschlüssige Verbindung zusätzlich über eine Niet- oder Schraubverbindung gesichert ist. Dadurch kann eine besonders feste lösbare Verbindung realisiert werden.
Die vorgenannten mehrteiligen Ausführungsvarianten bieten den Vorteil, dass zur Herstellung der einzelnen Bestandteile des Vierpunktlenkers kleinere Werkzeuge verwendet werden können, wodurch ein kostengünstiger Herstellungsprozess ermöglicht wird. Ferner wird die Handhabung der Bauteile erleichtert.
Alternativ besteht im Rahmen der Erfindung die Möglichkeit, dass das Mittelteil endseitig einstückig mit den entsprechenden Lenkerarmen verbunden ist, was eine besonders feste Verbindung des Mittelteils an die Lenkerarme ermöglicht.

Gemäß der Erfindung besteht das Mittelteil aus zwei Teilen, beispielsweise zwei Hälften, die an einer Verbindungsstelle drehfest, beispielsweise mittels einer reibschlüssigen Verbindung, miteinander verbunden sind. Gemäß einer Variante dieser Ausgestaltungsform kann das Mittelteil aus zwei Teilen bestehen, die jeweils eine Flanschfläche aufweisen, die mit einer Niet- oder Schraubverbindung drehfest verbunden sind. Ein Vorteil dieser Ausführungsvarianten ist wiederum, dass das Mittelteil aus zwei kleineren Einzelteilen zusammengesetzt werden kann, wobei die kleineren Einzelteile wiederum fertigungstechnisch mit kleineren Werkzeugen, z. B. Schmiede- oder Gussformen, kostengünstiger herstellbar sind. Ferner kann das Mittelteil aus einem Kunststoff oder zumindest teilweise aus einem Kunststoff gefertigt sein, wobei der Kunststoff vorzugsweise ein glasfaser- (GFK) oder kohlenstoffstofffaserverstärkter (CFK) Kunststoff ist. Hierbei können die Lenkerarme aus Stahl oder Gusseisen gefertigt werden. Diese Variante bietet den Vorteil, dass die Materialauswahl für die einzelnen Abschnitte des Vierpunktlenkers optimal an die einzelnen Funktionen angepasst werden können, wobei beispielsweise die sicherheitsrelevante Längsführung durch die aus Stahl gefertigten Lenkerarme sichergestellt wird, die weniger sicherheitsrelevante Querstabilisierung durch ein mit einem leichteren Werkstoff gefertigtes Mittelteil bereitgestellt wird. Die Verbindungtechnik zwischen Mittelteil und den Lenkerarmen ist dabei nicht auf eine bestimmte Verbindungstechnik eingeschränkt.
Ferner besteht im Rahmen der Erfindung die Möglichkeit, in einer weiteren Ausführungsvariante eine Zahnstangenlenkanlage in den Vierpunktlenker zu integrieren.
Ferner kann das Mittelteil als geschlossener Hohlraum ausgeführt sein, der zur Speicherung eines Fluids ausgebildet ist. Diese Variante bietet den Vorteil, dass das Mittelteil neben der Wankstabilisierung zusätzlich als Speicher für Druckluft oder eines anderen Fluids, z. B. Lenköl, herangezogen werden kann und somit ein separater Fluidspeicher vermieden werden kann, wodurch eine weitere Reduzierung des erforderlichen Bauraums ermöglicht wird. Nach dem Stand der Technik besteht ferner die Möglichkeit, dass der Vierpunktlenker einteilig ausgeführt ist.
Hierbei kann in einer ersten Variante das Mittelteil als geschlossenes Rohr ausgeführt sein und die Lenkerarme ein zur Seite hin offenes Profil aufweisen. Das zur Seite hin offene Profil kann beispielsweise aus zwei parallel verlaufenden Kanten gebildet sein. Das ausgebildete Mittelteil ermöglicht eine besonders leichte Bauweise des Vierpunktlenkers.
Ferner können das Mittelteil und die Lenkerarme aus Vollmaterial gebildet sein, was eine besonders hohe Stabilität ermöglicht. In einer Variante dieser Ausgestaltungsform kann das aus Vollmaterial gebildete Mittelteil ferner hohlgebohrt sein, um eine Gewichtsreduktion zu ermöglichen. Diese Ausführungsvariante bietet den Vorteil, dass der Vierpunktlenker geschmiedet werden kann, während ein als geschlossenes Rohr ausgeführtes Mittelteil ein Gießverfahren zur Herstellung erfordert, falls als Material Stahl oder Gusseisen verwendet wird.
Ferner können am Mittelteil des Vierpunktlenkers Kernstützausnehmungen vorgesehen sein, um den Gussfertigungsprozess sicherer auszugestalten.
In einer weiteren Variante kann das Mittelteil eine nach unten und/oder oben offene Profilstruktur aufweisen. Eine nach unten offene Profilstruktur ist eine im montierten Zustand des Vierpunktlenkers zur Fahrbahnseite hin offene Profilstruktur. Ein derartiges Mittelteil bietet eine besonders hohe Stabilität bei gleichzeitig leichter Bauweise.
Ferner kann das Mittelteil eine Sollversagungsstelle aufweisen. Vorzugsweise ist die Sollversagungsstelle als Sollbruchstelle ausgebildet, so dass bei einer möglichen Überlastung des Vierpunktlenkers der Mittelteil bricht und nicht die Lenkerarme. Eine derartige Sollversagungsstelle kann auch so ausgebildet sein, dass es bei einer Überlastung zu einer Verdrehung im Mittelbereich kommt.
Eine Sollversagungsstelle bzw. Sollbruchstelle im Mittelteil bietet den Vorteil, dass eine Längsführung des Fahrzeugs stets gegeben ist. Dadurch kann eine Notlauffunktion (sog. "limp home mode") nach einem Bruch gewährleistet werden. Alternativ kann bei einem Bruch des Vierpunktlenkers die Quersteifigkeit über Drahtseile oder Ähnliches gewährleistet werden.
Die Lageraufnahmen des Vierpunktlenkers können versteift ausgeführt sein.
Es sei betont, dass der erfindungsgemäße Vierpunktlenker auch in anderen Achsaufhängungen zum Einsatz kommen kann. Die erfindungsgemäßen Varianten des Vierpunktlenkers sollen demnach auch unabhängig von der Achsaufhängung als offenbart gelten und beanspruchbar sein. Ein weiterer Aspekt der Erfindung betrifft somit einen Vierpunktlenker gemäß dem Anspruch 9. Ferner betrifft die Erfindung ein Nutzfahrzeug mit einer Achsaufhängung der gelenkten Starrachse nach einem der vorhergehenden Aspekte. Ferner betrifft die Erfindung ein Vierachser-Nutzfahrzeug mit zwei luftgefederten Vorderachsen, wobei für jede der zwei luftgefederten Vorderachsen eine Achsaufhängung gemäß einem der vorgehenden Aspekte vorgesehen ist.

Weitere Einzelheiten und Vorteile der Erfindung werden im Folgenden unter Bezug auf die beigefügten Zeichnungen beschrieben. Es zeigen:
- Figur 1A, Figur 1B und Figur 1C: eine perspektivische Ansicht, eine Seitenansicht und eine Unteransicht einer Achsaufhängung gemäß einem Ausführungsbeispiel;
- Figur 2A und Figur 2B: eine perspektivische Ansicht und eine Seitenansicht einer Achsaufhängung für zwei luftgefederte Vorderachsen gemäß einem Ausführungsbeispiel;
- Figuren 3 bis 7: verschiedene einteilig ausgeführte Ausführungsvarianten des nicht beanspruchten Vierpunktlenkers;
- Figuren 8, 9, 12A bis 13B: verschiedene mehrteilig ausgeführte Ausführungsvarianten des nicht beanspruchten Vierpunktlenkers.

Figuren 10,11 verschiedene mehrteilig ausgeführte Ausführungsvarianten des erfindungsgemäßen Vierpunktlenkers.

Die in Figur 1A dargestellte Achsaufhängung 10 stellt die Achsaufhängung einer luftgefederten gelenkte Vorderachse eines Nutzfahrzeugs dar. Achsaufhängungen für Starrachsen in Nutzfahrzeugen sind dem Fachmann gut bekannt, so dass in der Zeichnung nur die für das Verständnis der Erfindung notwendigen Bauteile dargestellt sind. Insbesondere sind die Räder, die Tragbälge, die Lenkanlage und die Stoßdämpfer, die in üblicher Weise ausgeführt sind, zur Verbesserung der Übersichtlichkeit nicht dargestellt.
Mit dem Bezugszeichen 3 ist jeweils ein Rahmenlängsträger des dem Fahrzeugaufbau zugehörigen Fahrzeugrahmens eines Nutzfahrzeugs bezeichnet. Der Fahrzeugrahmen ist in üblicher Weise gestaltet und weist auf beiden Seiten des Fahrzeuges je einen derartigen Rahmenlängsträger 3 auf. Zwischen diesen Längsträgern 3 sind üblicherweise Querträger (nicht gezeigt) angeordnet.
Die Achsaufhängung 10 umfasst zwei auf gleicher Höhe jeweils unterhalb der Rahmenlängsträger 1 des Fahrzeugs angeordnete und sich in Längsrichtung des Fahrzeugs erstreckende, die gelenkte Starrachse 6 mit dem Fahrzeugrahmenlängsträger 3 vertikal beweglich verbindende Längslenker 5. Von der gelenkten Starrachse ist in Figur 1A der Achskörper 6 dargestellt sowie sich die zur Seite hin wegerstreckenden Kragarme 8, die endseitig eine Achsfaust 8A aufweisen.

Zur rahmenseitigen Befestigung der Längslenker 5 weisen die Fahrzeugrahmenlängsträger 3 an ihrem vorderen Ende ein fest angeordnetes Befestigungselements 4 auf, an das ein rahmenseitige Ende 5A der Längslenker 5 angelenkt ist. Das Befestigungselement 4 erstreckt sich vom Rahmenlängsträger 3 vertikal nach unten und ist an der Unterseite des Rahmenlängsträgers 3 sowie über eine seitliche Befestigungsplatte 4A an der Querseite des Rahmenlängsträgers 3 befestigt. Zur achsseitigen Anbindung der Längslenker 5 sind auf dem Achskörper 6 unterhalb der Rahmenlängsträger 3 jeweils gabelförmige Lagerstellen 7 befestigt, auf denen das achsseitige Ende 5B der Längslenker 5 gelagert ist.

Die Achsaufhängung umfasst ferner einen Vierpunktlenker 30, der einerseits gelenkig mit der gelenkten Starrachse 6 und andererseits gelenkig mit dem Fahrzeugaufbau, hier dem Fahrzeugrahmenlängsträgern 3, verbunden ist. Der Vierpunktlenker besteht aus einem senkrecht zur Längsrichtung des Fahrzeugs angeordneten Mittelteil 31, das mit einem offenen Profilquerschnitt versehen ist und an dem endseitig einstückig die beiden Schenkel 32 des Vierpunktlenkers 30 angeordnet sind, wobei jeder Schenkel 32 aus einem ersten Lenkerarm 32A und einem zweiten Lenkerarm 32B besteht.

Zur gelenkigen Verbindung des Vierpunktlenkers 30 an die beiden Rahmenlängsträger 3 über das Befestigungselement 4 sowie zur gelenkigen Anbindung an den Achskörper 6 weisen die Lenkerarme 32 des Vierpunktlenkers an ihrem dem Zentralbereich 31 abgewandten Ende jeweils eine hohlzylindrische Lageraufnahme 1 auf, nachfolgend auch als Lagerauge bezeichnet. In den Lageraufnahmen 1 befindet sich jeweils ein eingepresstes Lager 2, beispielsweise ein Molekularlager oder ein Gleitlager, mit seitlichen Pratzen, zur Befestigung des Vierpunktlenkers an dem Rahmen bzw. Achskörper 6. Die Gelenkverbindungen der Längslenker 5 und die Gelenkverbindungen 1, 2 des Vierpunktlenkers 30 sind kardanisch beweglich ausgeführt. Die Ausrichtung der Pratzen 2 zur Befestigung des Vierpunktlenkers an Rahmen 3 bzw. Achskörper 6 kann beliebig variieren und hängt im Wesentlichen von den kinematischen bzw. elastokinematischen Gegebenheiten ab. Die Lageraugen sind nicht zwangsläufig Bestandteil des Vierpunktlenkers. Sie können auch nachträglich angebracht, z. B. angeschweißt, angeschraubt werden. Die Lagerung des Vierpunktlenkers kann mit den üblichen aus dem Stand der Technik bekannten Lagerungstechniken, beispielweise Molekularlager, Gleitlager, aktiv bzw. adaptiv, etc., realisiert sein.

Figur 1A zeigt, dass der Vierpunktlenker 30 und die Längslenker 5 unterhalb des dem Fahrzeugaufbau zugehörigen Fahrzeugrahmenlängsträgers 30 angeordnet sind und dass ferner der Vierpunktlenker 30 unterhalb des Längslenkers 5 angeordnet ist.

Damit benötigt die Achsaufhängung im Raum zwischen den Rahmenlängsträgern 3 und zwischen den Längslenkern 5 oberhalb des Vierpunktlenkers keinen Bauraum, der somit vorteilhafterweise anderweitig zur Nutzung zur Verfügung steht. Bei der gezeigten Achsführung übernehmen die oberen Längslenker 5 "nur" die Längsführung, d. h., es werden Zug- und Druckkräfte in das Fahrwerk übertragen. Der untere Vierpunktlenker 30 übernimmt die Funktionen der Fahrzeuglängs-/Fahrzeugquerführung und der Fahrzeugstabilisierung. Der Vierpunktlenker bestimmt auch die Steifigkeit des Fahrwerks um die Vertikalachse, beispielsweise beim Bremsen. Das Mittelteil des Vierpunktlenkers dient hierbei insbesondere als Torsionsbereich und trägt hauptsächlich zur Wankstabilisierung des Fahrzeugs bei und überträgt die Fahrzeugquerkräfte. Das Mittelteil des Vierpunktlenkers kann die folgenden Aufgaben übernehmen: Stabilisierung des Fahrzeugs, Seitenkraftaufnahme, Aufnahme einer Lenkgetriebebefestigung (Lenkanlage wird aufgeschraubt) oder Integration einer Lenkanlage, d. h., das Vierpunktlenkermittelteil dient gleichzeitig als Gehäuse der Lenkanlage.

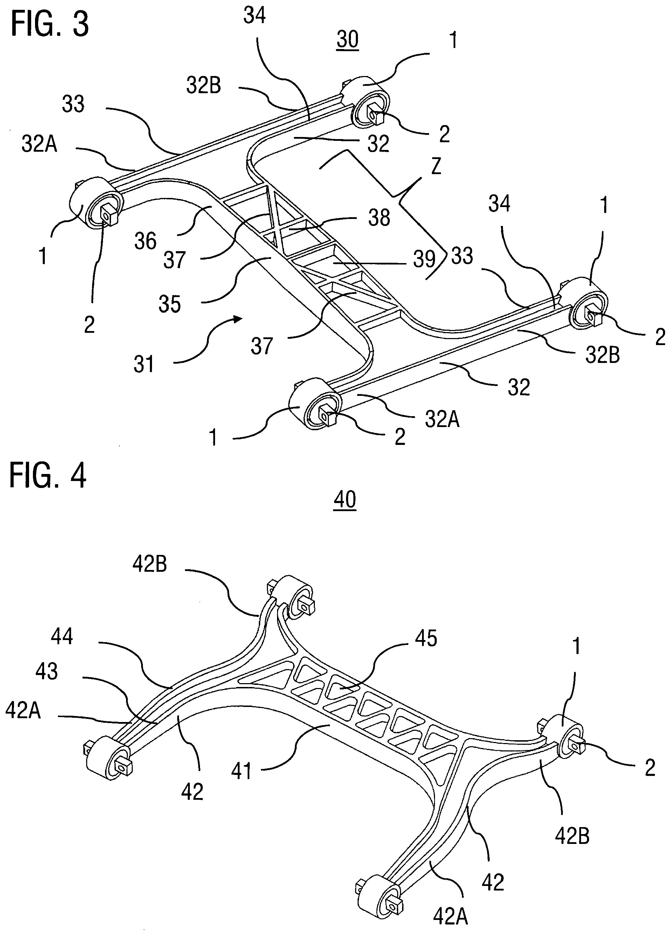

Der Aufbau des Vierpunktlenkers 30 wird nachfolgend noch detaillierter im Rahmen der Beschreibung zu der Figur 3 beschrieben.

Figur 1B zeigt den Aufbau der Figur 1A nochmals in einer Seitenansicht. Gemäß der gezeigten Ausführungsvariante der Achsaufhängung 10 sind die Längslenker 5 und die Lenkerarme 32A, 32B des Vierpunktlenkers 30 parallel zueinander verlaufend angeordnet, so dass diese den gleichen Winkel mit dem Fahrzeugrahmenlängsträger 3 ausbilden. Mit anderen Worten ist der Winkel α des Längslenkers 5 zur Längsachse des Fahrzeugrahmenlängsträgers 3 gleich dem Winkel ß der Lenkerarme 32A, 32B zur Längsachse des Fahrzeugrahmenlängsträgers 3. Das obere Längslenkerpaar und der untere Vierpunktlenker bilden somit im Idealfall im oben genannten Sinne ein Parallelogramm aus. Es wird jedoch betont, dass auch Abweichungen aus fahrdynamischen Gründen möglich sind. Der spitze Winkel des Längslenkers 5 und der Lenkerarme 32A, 32B zum Fahrzeugrahmenlängsträger 3 kann fahrzeugspezifisch unterschiedlich eingestellt werden.

Gemäß dem in den Figuren 1A und 1B gezeigten Ausführungsbeispiel sind jeweils ein Längslenker 5 und die darunter angeordneten Lenkerarme 32A und 32B im Wesentlichen in der gleichen sich vertikal erstreckenden Ebene angeordnet. Es besteht jedoch auch die Möglichkeit, dass die Längslenker 5 mit einer Pfeilung versehen sind, d. h. in einer Horizontalebene verdreht zu den Lenkerarmen 32A und 32B bzw. zu der Längsachse des Fahrzeugrahmenlängsträgers 3 angeordnet sind. Eine mögliche Pfeilung der Längslenker 5 kann sowohl nach vorne in Fahrtrichtung als auch in die entgegengesetzte Richtung zeigen. Die Größe der Pfeilung der oberen Längslenker 5 hängt im Wesentlichen von fahrdynamischen Gesichtspunkten ab und kann fahrzeugspezifisch eingestellt werden.

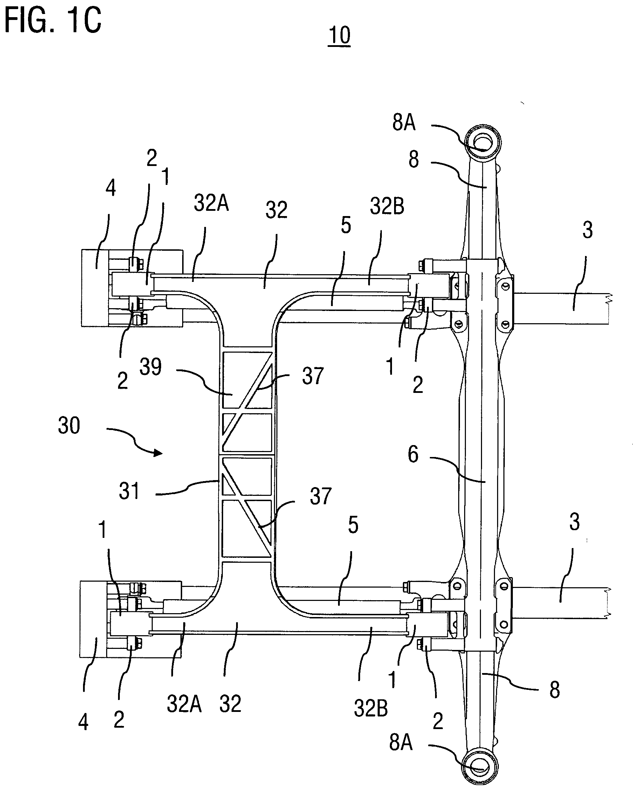

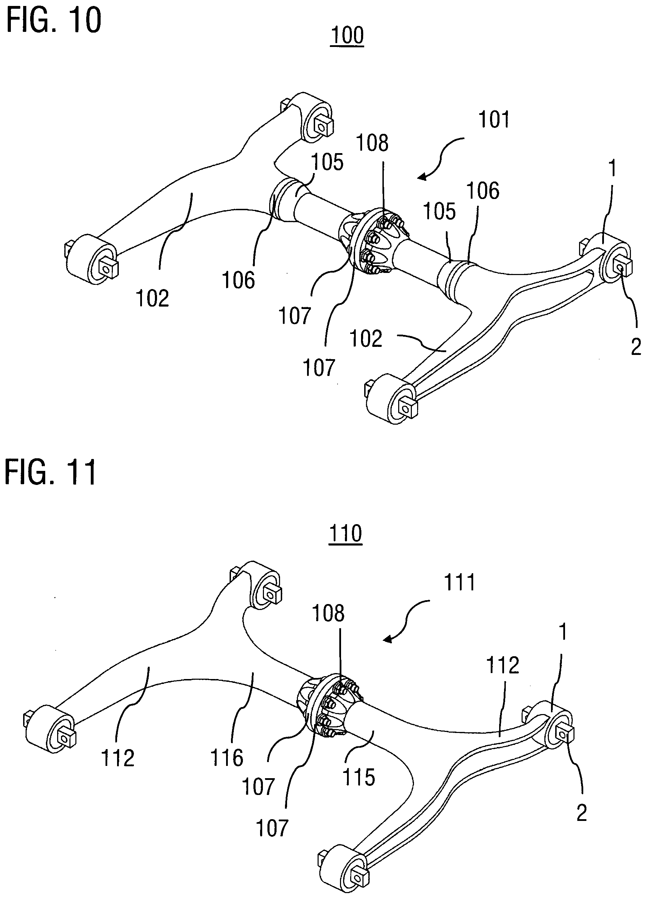

In Figur 1C ist die Achsaufhängung nochmals in einer Unteransicht dargestellt. Es sei betont, dass auch andere Vierpunktlenker, insbesondere die beanspruchten Vierpunktlenker gemäß der Figuren 10, 11 statt des in den Figuren 1A bis 1C gezeigten Vierpunktlenkers 30 zur erfindungsgemäßen Achsaufhängung verwendet werden können.

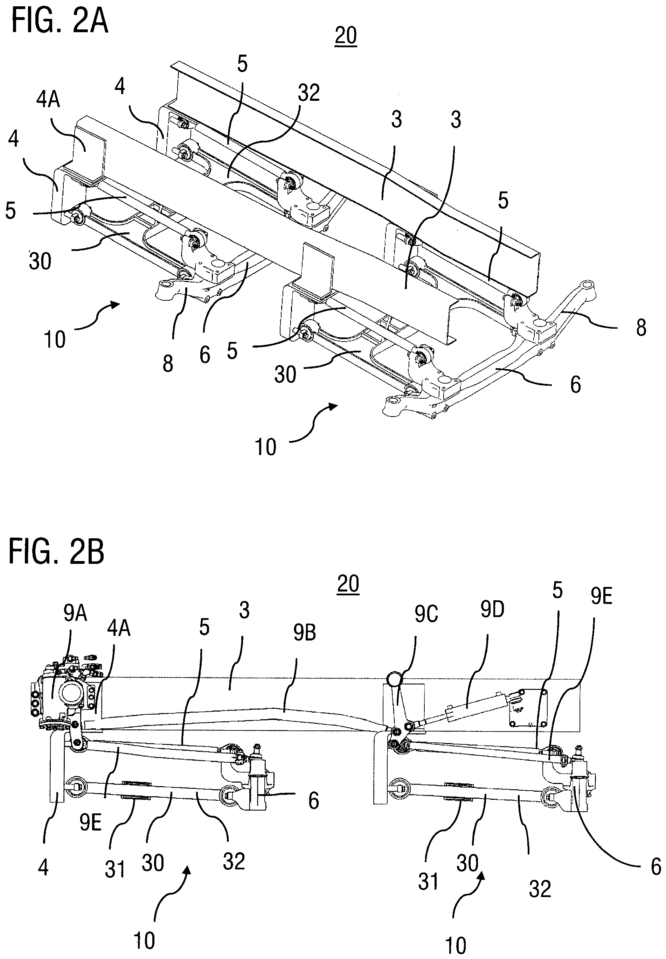

Figur 2A zeigt ein weiteres Ausführungsbeispiel einer Achsaufhängung 20 eines Vierachserfahrzeugs mit zwei luftgefederten Vorderachsen 6. Zur Vereinfachung der Darstellung sind wiederum die Räder, Tragbälge oder Stoßdämpfer sowie das Lenkgetriebe und das Lenkgestänge nicht dargestellt. Hierbei entsprechen Komponenten mit gleichen Bezugszeichen den Komponenten der Figur 1A und werden nicht gesondert beschrieben. Der Aufbau entspricht im Prinzip dem Aufbau der Figur 1, mit der Besonderheit, dass nun an jeder der beiden luftgefederten Vorderachsen 6 eine Achsaufhängung 10 mit jeweils einem Vierpunktlenker 30 und darüber angeordneten zwei Längslenkern 5 vorgesehen ist, die jeweils wiederum unterhalb des Fahrzeugrahmenlängsträgers 3 angeordnet sind.
In Figur 2B ist eine Seitenansicht dargestellt, wobei zusätzlich zu den Elementen der Figur 2A nun die Lenkanlage dargestellt ist, umfassend ein Lenkgetriebe 9A, und eine Synchronisierungsstange 9B zur Synchronisation der beiden Achsaufhängungen, die an einem am Rahmenlängsträger 3 befestigten, drehbar gelagerten Schlepphebel 9C angelenkt ist. Am Schlepphebel 9C ist ferner in bekannter Weise ein Zylinder 9D angelenkt, der an seinem anderen Ende ebenfalls fest und drehbar gelagert am Fahrzeugrahmen 3 befestigt ist. Ferner sind parallel und seitlich versetzt zu den Längslenkern 5 jeweils Lenkstangen 9E der Lenkanlage angeordnet.
Nachfolgend werden in den Figuren 3 bis 13B besonders vorteilhafte Ausführungsvarianten eines Vierpunktlenkers beschrieben, deren Verwendung im Rahmen einer zuvor beschriebenen Achsaufhängung besonders vorteilhaft ist.
Jede der beschriebenen Vierpunktlenkerausführungen umfasst ein Mittelteil, an dessen beiden Enden je ein Schenkel im Wesentlichen senkrecht zum Mittelteil drehfest angeordnet ist, wobei ein erster Abschnitt der Schenkel jeweils durch einen der ersten Lenkerarme und ein zweiter Abschnitt der Schenkel jeweils durch einen der zweiten Lenkerarme gebildet werden.

Hierbei können die ersten Lenkerarme mit unterschiedlicher oder gleicher Länge zu den zweiten Lenkerarmen ausgebildet sein.

Zunächst werden in den Figuren 3 bis 7 Vierpunktlenkervarianten beschrieben, die einteilig ausgeführt sind. Es wird betont, dass unter einer einteiligen Ausführung des Vierpunktlenkers eine einteilige Ausführung des Mittelteils und der an dessen beiden Enden angeordneten Schenkel verstanden wird, wobei ein erster Abschnitt der Schenkel jeweils einen ersten Lenkerarm und ein zweiter Abschnitt der Schenkel jeweils einen zweiten Lenkerarm ausbilden. Das bedeutet, dass eine einteilige Ausführung des Vierpunktlenkers im Sinne dieser Erfindung mit oder ohne Lageraufnahmen 1 (nachfolgend auch als Lageraugen bezeichnet) ausgeführt sein kann und unter einer einteiligen Ausführung des Vierpunktlenkers auch eine Ausführung mit nachträglich befestigten Lageraugen 1 und eine Ausführung mit Lageraugen 1 und eingepressten Lagern 2 verstanden werden kann.

Figur 3 zeigt eine Ausführungsvariante 30 des Vierpunktlenkers. Es wurde bezüglich der Figur 1A bereits erwähnt, dass der Vierpunktlenker ein im montierten Zustand senkrecht zur Längsrichtung des Fahrzeugs angeordnetes Mittelteil 31 umfasst, das mit einem offenen Profilquerschnitt versehen ist und an dem endseitig einstückig die beiden Schenkel 32 des Vierpunktlenkers angeordnet sind, wobei jeder Schenkel 32 aus einem ersten Lenkerarm 32A und einem zweiten Lenkerarm 32B besteht.

An den Schenkeln endseitig angeformt sind jeweils die hohlzylinderförmigen Lageraugen 1 mit eingepressten Lagern 2 zur Lagerung des Vierpunktlenkers an der Achsaufhängung bzw. dem Fahrzeugrahmen. Die Lenkerarme 32A und 32B haben einen H-förmigen bzw. doppelt-U-förmigen Profilquerschnitt mit den Seitenkanten 33, 34. Der Profilquerschnitt des Mittelteils 31 ist nach oben und unten hin offen und weist einzelne in Längsrichtung verlaufende Profilstege 38 auf, die das Mittelteil in einzelne rechteckförmige Profilvertiefungen 39 unterteilen. Der Profilquerschnitt des Mittelteils 31 weist ferner zwei diagonal verlaufende Profilstege 37 auf, die die rechteckförmigen Profilvertiefungen 39 durchqueren und sich mittig treffen. Ferner ist das Mittelteil 30 zu den Schenkeln 32 hin mit leicht abnehmender Dicke ausgebildet, so dass die Dicke in der Mitte 35 größer ist als am Endbereich 36 des Mittelteils 31.

Ein besonderer Vorzug dieses Vierpunktlenkers 30 liegt darin, dass das offene Bauteilprofil besonders leicht gieß- oder schmiedbar ist.

Gemäß einer besonders vorteilhaften Ausführungsvariante kann in dem Mittelteil eine Sollbruchstelle vorgesehen sein. Der Bereich, in dem die Sollbruchstelle angeordnet werden kann, ist durch den mit "Z" markierten Bereich in Figur 3 dargestellt. Die Sollbruchstelle kann durch eine Einkerbung oder einen Bereich erhöhter Materialspannung ausgebildet sein. Dabei ist das Mittelteil so ausgeführt, dass das Mittelteil bei einer Überlastung an der Sollbruchstelle bricht, so dass eine Längsführung des Fahrzeugs weiter gegeben ist. Alternativ kann beim Bruch des Vierpunktlenkers die Quersteifigkeit über Drahtseile oder Ähnliches gewährleistet werden.

Figur 4 zeigt eine weitere Ausführungsvariante 40 des Vierpunktlenkers. Eine Besonderheit dieses Ausführungsbeispiels liegt darin, dass das Mittelteil 41 mit einer dreieckförmigen Profilstruktur 45 versehen ist. Die dreieckförmige Profilstruktur kann vorteilhafterweise aus einer in Querrichtung verlaufenden Anordnung von dreieckförmigen Vertiefungen gebildet sein, wobei benachbarte Vertiefungen in Längsrichtung versetzt und um 180° angeordnet sind. Ferner sind die Schenkel 42 bzw. die Lenkerarme 42A und 42B im Wesentlichen senkrecht zum Mittelteil angeordnet, jedoch leicht gekrümmt bzw. geschwungen ausgeführt, derart, dass die Lenkerarme an ihrem achsseitigen und rahmenseitigen Endbereich weiter in Querrichtung vom Mittelteil 41 entfernt sind als ihr Endbereich am Mittelteil. Die Lenkerarme 42A und 42B haben ebenfalls einen H-förmigen bzw. doppelt-U-förmigen Profilquerschnitt mit den Seitenkanten 43, 44.

Die Ausführungsvariante 40 eignet sich besonders gut für eine Herstellung im Schmiedeverfahren.

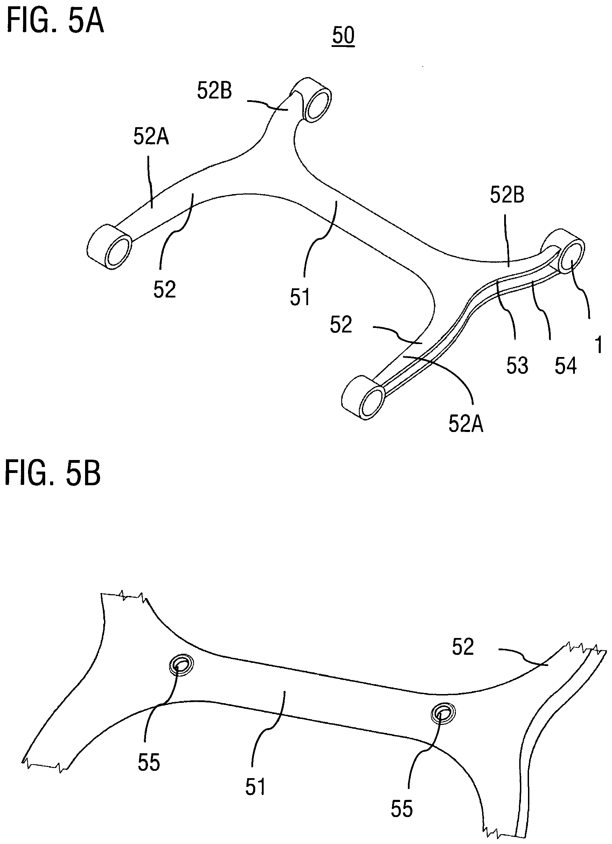

Figur 5A zeigt eine weitere Ausführungsvariante 50 des Vierpunktlenkers mit einem geschlossenen rohrförmigen Mittelteil 51 und einem zur Seite hin offenem Profil der Schenkel 52. Hierbei sind die Schenkel wiederum senkrecht am Mittelteil 51 einstückig befestigt und weisen einen leicht gekrümmten bzw. geschwungenen Verlauf auf. Das zur Seite hin offene Profil wird durch zwei parallele in vertikaler Richtung versetzte Kanten 53, 54 gebildet.

Figur 5B zeigt eine weitere Ausführungsvariante 50 des Vierpunktlenkers der Figur 5A in einer vergrößerten Darstellung des Mittelteils 51, bei dem zusätzlich sogenannte Kernstützen 55 im Endbereich des Mittelteils vorgesehen sind. Die Kernstützen 55 dienen dazu, den Gussfertigungsprozess sicherer zu gestalten, und resultieren von den positiven Halterungsbolzen der Gussformen. Die Lage und Anordnung der Kernstützen 55 richtet sich nach den Anforderungen der Bauteilfunktion und -festigkeit. Im vorliegenden Beispiel sind die Kernstützen 55 an der Unterseite des Vierpunktlenkers 50 angeordnet, können jedoch auch beidseitig angebracht sein. Die Kernstützen können mit anderen Funktionsbauteilen wieder verschlossen werden, z. B. mit Druckluftanschlüssen.

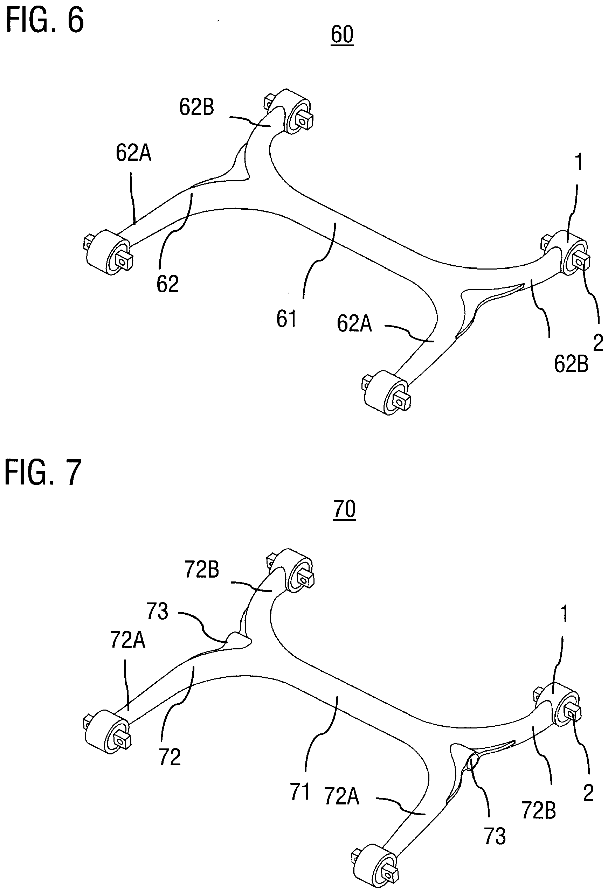

Figur 6 zeigt ein weiteres Ausführungsbeispiel 60 des Vierpunktlenkers, bei dem das Mittelteil 61 und die Schenkel 62 bzw. Lenkerarme 62A, 62B aus Vollmaterial, d. h. ohne Hohlquerschnitt, ausgebildet sind. Ein derartiger Vierpunktlenker wird typischerweise geschmiedet.

Figur 7 zeigt eine Abwandlung 70 dieses Ausführungsbeispiels. Die Besonderheit dieses Ausführungsbeispiels besteht darin, dass der Vierpunktlenker der Figur 6 nachträglich hohlgebohrt wurde, so dass das Mittelteil 71 einen durchgehenden Hohlraum 73 umfasst. Die Schenkel 72 bzw. Lenkerarme 72A und 72B entsprechen dem Ausführungsbeispiel der Figur 6.

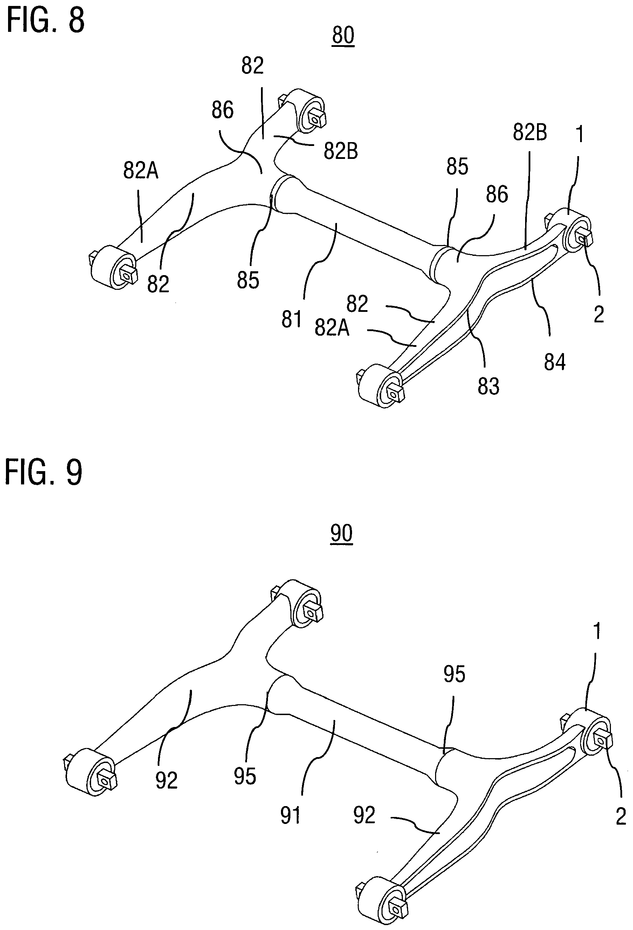

Mehrteilig ausgeführte Ausführungsbeispiele des Vierpunktlenkers sind nachfolgend in den Figuren 8 bis 13B beschrieben.

Figur 8 zeigt eine Ausführungsvariante 80 eines Vierpunktlenkers, wobei die Schenkel 82, bzw. Lenkerarme 82A, 82B beispielsweise den Schenkeln 52 der Figur 5A entsprechen. Die Schenkel sind jedoch nicht einstückig mit dem Mitteilteil 81 ausgeführt, sondern das hohlzylinderförmige Mittelteil 81 wird nachträglich stoffschlüssig durch Schweißen an der Verbindungsstelle 85 mit den Schenkeln 82 verbunden. Hierzu sind die Schenkel 82 mit einem sich in Querrichtung erstreckenden zylindrischen Anschlussbereich 86 versehen. Die Seitenteile 182 bestehen hierzu aus verschweißbarem Material (Gusseisen oder Schmiedestahl). Die Anschweißstelle wird gemäß den schweißtechnischen Anforderungen vorbereitet. Die Ausführungsform des Mittelteils richtet sich nach den Anforderungen der Schweißnaht, beispielsweise geeignete Schweißnahtvorbereitung, Durchmesservergrößerung zur Spannungsabsenkung an den Schweißnähten, etc..

Dadurch können für die Herstellung der einzelnen Teile des Vierpunktlenkers kleinere Werkzeuge verwendet werden, was die Herstellungskosten reduziert.

Eine weitere Variante 90 des Vierpunktlenkers ist in Figur 9 dargestellt, wobei im Unterschied zu Figur 8 nun das Mittelteil 91 an der Verbindungsstelle 95 mit den Schenkeln 92 stoffschlüssig durch Kleben verbunden ist. Dies ist besonders vorteilhaft, falls das Mittelteil 91 beispielsweise aus einem leichten Kunststoff, wie beispielsweise GFK oder CFK, ausgeführt ist.

Figur 10 zeigt die beanspruchte erfindungsgemäße Ausführungsvariante 100 des Vierpunktlenkers, bei dem das Mittelteil 101 aus zwei Teilen besteht, die mittig an einer Flanschfläche 107 mittels Schrauben 108 verschraubt sind. Die Verbindung der beiden Teile des Mittelteils 101 mit den jeweiligen Schenkeln 102 erfolgt stoffschlüssig, beispielsweise durch Schweißen an dem Bereich 106. Um den kleineren Durchmesser der Mittelteile an den größeren Durchmesser des Anschlussstücks der Schenkel anzupassen, weisen die beiden Teile des Mittelteils 101 an ihrem den Schenkeln 102 zugewandten Endbereich eine Durchmesservergrößerung 105 zur Spannungsabsenkung an den Schweißnähten auf.

Figur 11 zeigt eine weitere erfindungsgemäße Ausführungsvariante 110, bei der das Mittelteil 111 wiederum über eine Flanschverschraubung 107, 108 mittig verbunden ist. Im Unterschied zu dem vorherigen Ausführungsbeispiel sind die beiden Teile 115, 116 des Mittelteils 111 einstückig mit den Schenkeln 112 des Vierpunktlenkers verbunden.

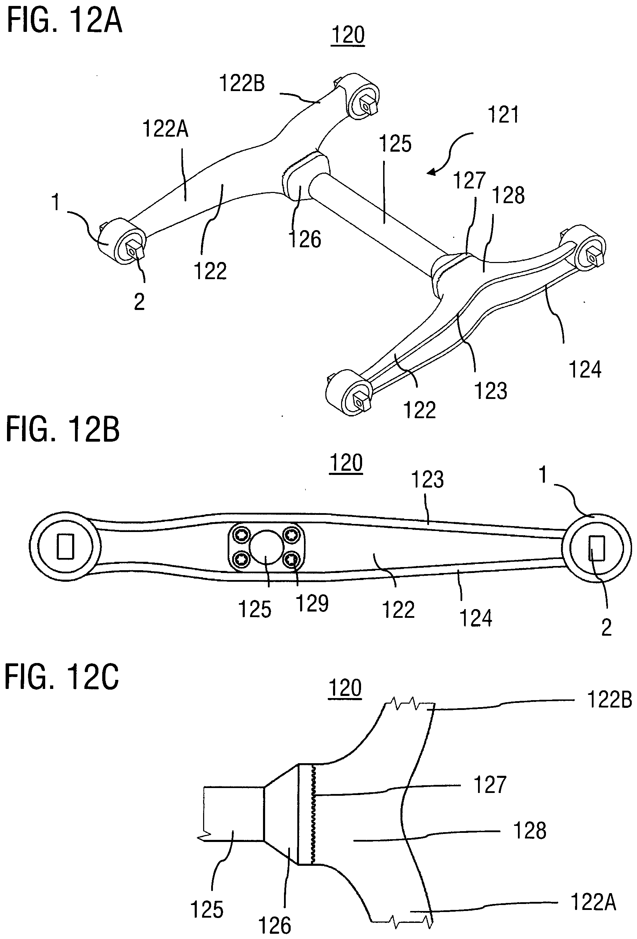

In den Figuren 12A bis 12C ist eine weitere Ausführungsvariante 120 des Vierpunktlenkers gezeigt. Die Besonderheit dieses Ausführungsbeispiels liegt darin, dass das Mittelteil 121 eine hohlzylinderförmige Stange 125 umfasst, die über eine formschlüssige Verbindung in Form einer Verzahnung 127 mit dem Anschlussbereich 128 der Schenkel 122 verbunden ist. Die formschlüssige Verbindung ist zusätzlich über eine Niet- oder Schraubverbindung gesichert. Dies ist in der Seitenansicht 12B gezeigt, die die Sicherungsschrauben 129 an der Innenseite des Hohlprofils der Schenkel 122 zeigen. Zur Kosteneinsparung werden vorzugsweise Durchgangslöcher mit einer Schrauben-Mutter-Verbindung 129 verwendet.
Das Hohlprofil besteht wiederum aus einem U-förmigen Querschnitt mit den äußeren Kanten 123, 124. Ein besonderer Vorzug dieser Ausführungsvariante ist das besonders vorteilhafte Leichtbaupotential. Figur 12C zeigt in einem Ausschnitt den formschlüssigen Verbindungsbereich 127 zwischen dem Mittelteil 125 und den Schenkeln 122. Das Mittelteil 121 verfügt endseitig wieder über einen Durchmesservergrößerungsbereich 126 zur Anpassung an den Verbindungsquerschnitt 128 der Schenkel 122.

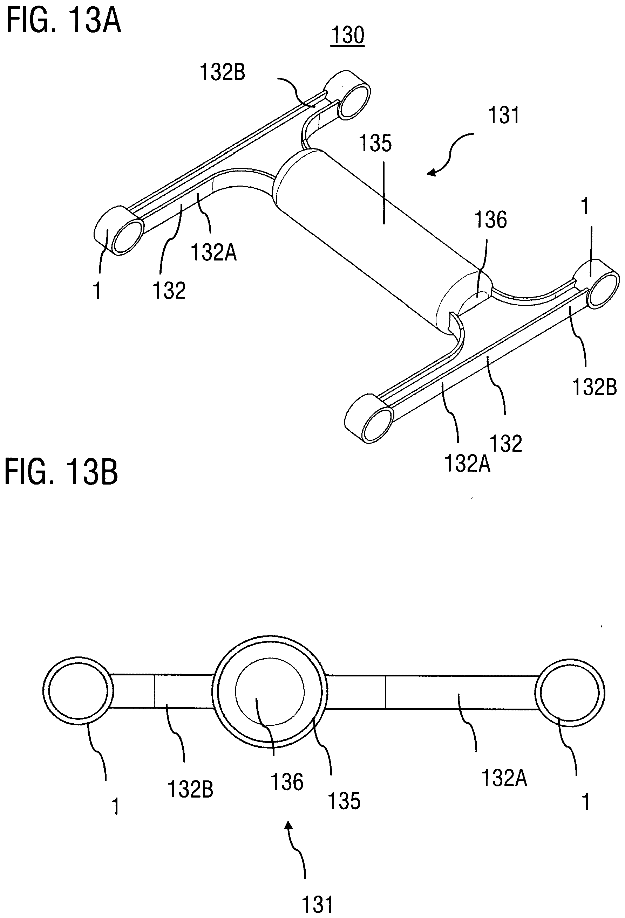

Figur 13A zeigt eine weitere Ausführungsvariante 130 des Vierpunktlenkers. Die Besonderheit dieser Ausführungsvariante ist die Ausgestaltung des Mittelteils 131 als geschlossener Hohlraum 135 (geschlossener Profilquerschnitt). Der geschlossene Hohlraum 135 kann beispielsweise als Speicherraum für Druckluft oder andere Fluide herangezogen werden. Durch den Einsatz von Druckluft oder anderen Fluiden können die physikalischen Eigenschaften des Fahrwerks mit Vierpunktlenkern gezielt beeinflusst werden (Eigenfrequenz, aktive Wankstabilisierung, Steifigkeiten, usw.). In der schematischen Darstellung der Figur 13A sind die Anschlüsse zur Druckluftversorgung nicht dargestellt. Die Schenkel 132 bzw. Lenkerarme 132A und 132B sind wiederum als Gusseisen- oder Schmiedestahlteile mit einem H-förmigen Profilquerschnitt ausgebildet. Der geschlossene Hohlzylinder 135 kann beispielsweise an den Anschlussbereich 136 an die Schenkel 132 angeschweißt sein.

Figur 13B zeigt das Ausführungsbeispiel 130 der Figur 13A nochmals in einer seitlichen Schnittansicht.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Zusätzlich können viele Modifikationen ausgeführt werden, um eine bestimmte Situation oder ein bestimmtes Material an die Lehre der Erfindung anzupassen, ohne den zugehörigen Bereich zu verlassen.

So können je nach Ausführungsvariante des Vierpunktlenkers unterschiedliche Fertigungsverfahren zum Einsatz kommen, beispielsweise Gieß- und Schmiedetechnik, Sintern, Laser-3D-Druck, mechanische Bearbeitung, etc.. Insbesondere können neben Gusseisen und Stahl auch allgemeine Legierungen, Schmiedestahl, faserverstärkter Kunststoff oder Kompositwerkstoffe zum Einsatz kommen. Grundsätzlich können die auftretenden Kräfte der beiden Bauteilhälften mit unterschiedlichen aus dem Stand der Technik bekannten Verbindungsmethoden übertragen werden, beispielsweise mittels einer reibschlüssigen Verbindung, z. B. Klemmschrauben, mittels Formschluss, z. B. Passschrauben, Bolzen zur Übertragung der Scherkräfte, einer Verrasterung, einer Verzahnung, mittels einer Nietverbindung, oder durch Adhäsion/Kohäsion (Kleben). Eine Verbindung der Schenkel durch Kleben mit dem Mittelteil bietet den besonderen Vorteil, dass das Material keine thermisch induzierten Spannungen erhält oder lokale Spannungserhöhungen durch die Verschraubung. Das Mittelteil des Vierpunktlenkers kann aus einem Rundmaterial oder einem beliebig anderen Formmaterial bestehen.

Folglich soll die Erfindung nicht auf die offenbarten Ausführungsbeispiele begrenzt sein, sondern die Erfindung soll alle Ausführungsbeispiele umfassen, die in den Bereich der beigefügten Patentansprüche fallen.

### Bezugszeichenliste

- 1: Lageraufnahme
- 2: Pratze
- 3: Rahmenlängsträger
- 4: Befestigungselement
- 4A: Befestigungsplatte
- 5: Längslenker
- 5A, 5B: Endbereiche der Längslenkers
- 6: Achskörper
- 7: Halterungselement
- 8: Kragarm
- 8A: Achsfaust
- 10: Achsaufhängung
- 20: Achsaufhängung bei zwei Vorderachsen
- 30: Vierpunktlenker
- 31: Mittelteil
- 32: Schenkel
- 32A, 32B: Erster, zweite Lenkerarm
- 33, 34: Profilkanten
- 35: Mittelbereich des Mittelteils
- 36: Endbereich des Mittelteils
- 37: Diagonalsteg
- 38: Quersteg
- 39: Profilvertiefung
- 40: Vierpunktlenker
- 41: Mittelteil
- 42: Schenkel
- 42A, 42B: Erster, zweiter Lenkerarm
- 43,44: Profilkanten
- 45: Dreieckförmige Profilvertiefung
- 50: Vierpunktlenker
- 51: Mittelteil
- 52: Schenkel
- 52A, 52B: Erster, zweiter Lenkerarm
- 53,54: Profilkanten
- 60: Vierpunktlenker
- 61: Mittelteil
- 62: Schenkel
- 62A, 62B: Erster, zweiter Lenkerarm
- 70: Vierpunktlenker
- 71: Mittelteil
- 72: Schenkel
- 72A, 72B: Erster, zweiter Lenkerarm
- 73: Hohlbohrung
- 80: Vierpunktlenker
- 81: Mittelteil
- 82: Schenkel
- 82A, 82B: Erster, zweiter Lenkerarm
- 83,84: Profilkanten
- 85: Schweißnaht
- 86: Verbindungsbereich der Schenkel
- 90: Vierpunktlenker
- 91: Mittelteil
- 92: Schenkel
- 92A, 92B: Erster, zweiter Lenkerarm
- 95: Klebestelle
- 100: Vierpunktlenker
- 101: Mittelteil
- 102: Schenkel
- 102A, 102B: Erster, zweiter Lenkerarm
- 105: Durchmesservergrößerung
- 106: Schweißnaht
- 107: Flanschfläche
- 108: Verschraubung
- 110: Vierpunktlenker
- 111: Mittelteil
- 112: Schenkel
- 112A, 112B: Erster, zweiter Lenkerarm
- 115, 116: Teilstücke des Mittelteils
- 120: Vierpunktlenker
- 121: Mittelteil
- 122: Schenkel
- 122A, 122B: Erster, zweiter Lenkerarm
- 123,124: Profilkanten
- 125: Hohlzylinderförmiges Mittelstück
- 126: Durchmesservergrößerung
- 127: Verzahnung
- 128: Anschlussbereich der Schenkel
- 129: Verschraubung
- 130: Vierpunktlenker
- 131: Mittelteil
- 132: Schenkel
- 132A, 132B: Erster, zweiter Lenkerarm
- 135: Geschlossener Hohlraum
- 136: Verbindungsbereich

## Patentansprüche

1. Achsaufhängung (10; 20) für gelenkte Starrachsen (6) in Fahrzeugen, insbesondere Nutzfahrzeugen, umfassend
zwei beidseits der Längsachse des Fahrzeugs angeordnete und sich in Längsrichtung des Fahrzeugs erstreckende, die gelenkte Starrachse (6) mit dem Fahrzeugaufbau (3) vertikal beweglich verbindende Längslenker (5); und
einen Vierpunktlenker (100; 110), der einerseits gelenkig mit der gelenkten Starrachse (6) und anderseits gelenkig mit dem Fahrzeugaufbau verbunden ist, wobei der Vierpunktlenker (100; 110) und die Längslenker (5) unterhalb des Fahrzeugaufbaus angeordnet sind und der Vierpunktlenker unterhalb der Längslenker (5) angeordnet ist, wobei der Vierpunktlenker (100; 110) ein im eingebauten Zustand des Vierpunktlenkers (100; 110) sich senkrecht zur Fahrzeuglängsrichtung erstreckendes Mittelteil (101; 111) umfasst, an dessen beiden Enden je ein erster Lenkerarm (102; 112) und ein zweiter Lenkerarm (102; 112) fest mit dem Mittelteil (101; 111) verbunden sind, wobei die zwei ersten Lenkerarme gelenkig mit dem Fahrzeugaufbau (3) und die zwei zweiten Lenkerarme gelenkig mit der gelenkten Starrachse (6) verbunden sind;
wobei
a) das Mittelteil (121) über eine formschlüssige Verbindung, vorzugsweise eine Verzahnung, mit den Lenkerarmen verbunden ist, wobei die formschlüssige Verbindung zusätzlich über eine Niet- oder Schraubverbindung gesichert ist; oder
b) das Mittelteil (101) stoffschlüssig mit den Lenkerarmen (102) verbunden ist, vorzugweise durch Kleben oder Schweißen; oder
c) das Mittelteil (111) endseitig einstückig mit dem entsprechenden Lenkerarmen (112) verbunden ist;
**dadurch gekennzeichnet,**
d) dass das Mittelteil (101; 111) aus zwei Teilen besteht, die an einer Verbindungsstelle drehfest miteinander verbunden sind.

2. Achsaufhängung nach Anspruch 1, **dadurch gekennzeichnet, dass** die gelenkte Starrachse (6) eine luftgefederte Vorderachse, eine Nachlaufachse oder eine Vorlaufachse eines Nutzfahrzeugs ist.

3. Achsaufhängung nach Anspruch 1 oder 2, **dadurch gekennzeichnet,**
a) **dass** die Längslenker und die Lenkerarme einen im Wesentlichen gleich großen Winkel (α, β) zu einem Fahrzeugrahmenlängsträger (3) des Fahrzeugaufbaus bilden; und/oder
b) **dass** die Längslenker (5) im Wesentlichen parallel zu unterhalb angeordneten Lenkerarmen (32) des Vierpunktlenkers (30) verlaufen.

4. Achsaufhängung nach einem der vorhergehenden Ansprüche 1 bis 3, **dadurch gekennzeichnet, dass** das Mittelteil stabförmig, zylinderförmig, stangenförmig, rohrförmig, als Profilstück und/oder gekröpft ausgeführt ist.

5. Achsaufhängung nach einem der vorhergehenden Ansprüche, **dadurch gekennzeichnet, dass** das Mittelteil aus zwei Teilen besteht, die jeweils eine Flanschfläche (106, 107) aufweisen, die mit einer Niet- oder Schraubverbindung (108) drehfest verbunden sind.

6. Achsaufhängung nach einem der vorherigen Ansprüche, **dadurch gekennzeichnet, dass** das Mittelteil aus einem Kunststoff oder zumindest teilweise aus einem Kunststoff gefertigt ist, wobei der Kunststoff vorzugsweise ein glasfaser- oder kohlenstofffaserverstärkter Kunststoff ist.

7. Achsaufhängung nach einem der vorhergehenden Ansprüche, **dadurch gekennzeichnet, dass** das Mittelteil (131) als geschlossener Hohlraum ausgeführt ist, der zur Speicherung eines Fluids ausgebildet ist.

8. Achsaufhängung nach einem der vorhergehenden Ansprüche, **dadurch gekennzeichnet, dass** das Mittelteil eine Sollversagungsstelle aufweist.

9. Vierpunktlenker (100; 110), aufweisend die Merkmale des Vierpunktlenkers (100; 110) der Achsaufhängung (10; 20) nach einem der vorhergehenden Ansprüche 1 bis 8.

10. Nutzfahrzeug mit einer Achsaufhängung (10) der gelenkten Starrachse nach einem der vorhergehenden Ansprüche 1 bis 8.

11. Vierachser-Nutzfahrzeug mit zwei luftgefederten Vorderachsen (5), wobei für jede der zwei luftgefederten Vorderachsen (5) eine Achsaufhängung (10) gemäß einem der vorhergehenden Ansprüche 1 bis 8 vorgesehen ist.

## Claims

1. Axle suspension (10; 20) for steered rigid axles (6) in vehicles, especially commercial vehicles, comprising
two longitudinal links (5), which are arranged on both sides of the longitudinal axis of the vehicle, extend in the longitudinal direction of the vehicle and connect the steered rigid axle (6) to the vehicle body (3) in a manner which allows vertical movement; and
a four-point link (100; 110), which is connected in an articulated manner to the steered rigid axle (6), on the one hand, and in an articulated manner to the vehicle body, on the other hand, wherein the four-point link (100; 110) and the longitudinal links (5) are arranged underneath the vehicle body, and the four-point link is arranged underneath the longitudinal links (5), wherein the four-point link (100; 110) comprises a central part (101; 111), which extends perpendicularly to the vehicle longitudinal direction in the installed state of the four-point link (100; 110) and at the two ends of which respective first link arms (102; 112) and second link arms (102; 112) are fixedly connected to the central part (101; 111), wherein the two first link arms are connected in an articulated manner to the vehicle body (3) and the two second link arms are connected in articulated manner to the steered rigid axle (6);
wherein
a) the central part (121) is connected to the link arms by a positive joint, preferably toothing, wherein the positive joint is additionally secured by means of a riveted or screwed joint; or
b) the central part (101) is connected materially to the link arms (102), preferably by adhesive bonding or welding; or
c) the central part (111) is connected integrally at the ends to the corresponding link arms (112);
**characterized**
d) in that the central part (101; 111) consists of two parts, which are connected to one another for conjoint rotation at a connection point.

2. Axle suspension according to Claim 1, **characterized in that** the steered rigid axle (6) is an air-sprung front axle, a trailing axle or a leading axle of a commercial vehicle.

3. Axle suspension according to Claim 1 or 2, **characterized**
(a) **in that** the longitudinal links and the link arms form an angle (α, β) of substantially the same size relative to a vehicle frame longitudinal member (3) of the vehicle body; and/or
(b) **in that** the longitudinal links (5) extend substantially parallel to link arms (32) of the four-point link (30), which are arranged underneath.

4. Axle suspension according to one of preceding Claims 1 to 3, **characterized in that** the central part is rodshaped, cylindrical, bar-shaped, tubular, embodied as a profile and/or cranked.

5. Axle suspension according to one of the preceding claims, **characterized in that** the central part consists of two parts, which each have a flange surface (106, 107), which are connected for conjoint rotation by means of a riveted or screwed joint (108).

6. Axle suspension according to one of the preceding claims, **characterized in that** the central part is manufactured from a plastic or at least partially from a plastic, wherein the plastic is preferably a glass-fibre-reinforced or carbon-fibre-reinforced plastic.

7. Axle suspension according to one of the preceding claims, **characterized in that** the central part (131) is embodied as a closed cavity, which is designed for the storage of a fluid.

8. Axle suspension according to one of the preceding claims, **characterized in that** the central part has a predetermined failure point.

9. Four-point link (100; 110), having the features of the four-point link (100; 110) of the axle suspension (10; 20) according to one of preceding Claims 1 to 8.

10. Commercial vehicle having an axle suspension (10) for the steered rigid axle according to one of preceding Claims 1 to 8.

11. Four-axle commercial vehicle having two air-sprung front axles (5), wherein an axle suspension (10) according to one of preceding Claims 1 to 8 is provided for each of the two air-sprung front axles (5).

## Revendications

1. Suspension d'essieux (10 ; 20) pour des essieux rigides articulés (6) de véhicules, en particulier de véhicules utilitaires, comprenant
deux barres de liaison longitudinales (5) disposées de part et d'autre de l'axe longitudinal du véhicule et s'étendant dans la direction longitudinale du véhicule, reliant de manière déplaçable verticalement l'essieu rigide articulé (6) à la carrosserie du véhicule (3) ; et
une barre de liaison à quatre points (100 ; 110), qui est connectée d'un côté de manière articulée à l'essieu rigide articulé (6) et de l'autre côté de manière articulée à la carrosserie du véhicule, la barre de liaison à quatre points (100 ; 110) et les barres de liaison longitudinales (5) étant disposées en dessous de la carrosserie du véhicule et la barre de liaison à quatre points étant disposée en dessous des barres de liaison longitudinales (5), la barre de liaison à quatre points (100 ; 110) comprenant une partie centrale (101 ; 111) s'étendant perpendiculairement à la direction longitudinale du véhicule dans l'état installé de la barre de liaison à quatre points (100 ; 110), un premier bras de barre de liaison (102 ; 112) et un deuxième bras de barre de liaison (102 ; 112) étant à chaque fois connectés fixement à la partie centrale (101 ; 111) au niveau de ses deux extrémité, les deux premiers bras de barre de liaison étant connectés de manière articulée à la carrosserie du véhicule (3) et les deux deuxièmes bras de barre de liaison étant connectés de manière articulée à l'essieu rigide articulé (6) ;
a) la partie centrale (121) étant connectée par le biais d'une connexion par engagement par correspondance de formes, de préférence une denture, aux bras de barre de liaison, la connexion par engagement par correspondance de formes étant en outre fixée par le biais d'une connexion par rivetage ou vissage ; ou
b) la partie centrale (101) étant connectée par engagement par liaison de matière aux bras de barre de liaison (102), de préférence par collage ou soudage ; ou
c) la partie centrale (111) étant connectée d'une seule pièce du côté de l'extrémité au bras de barre de liaison correspondant (112) ;
**caractérisée en ce que**
d) la partie centrale (101 ; 111) se compose de deux parties qui sont connectées l'une à l'autre de manière solidaire en rotation au niveau d'un point de connexion.

2. Suspension d'essieux selon la revendication 1, **caractérisée en ce que** l'essieu rigide articulé (6) est un essieu avant à suspension pneumatique, un essieu suiveur ou un essieu de guidage d'un véhicule utilitaire.

3. Suspension d'essieux selon la revendication 1 ou 2, **caractérisée en ce que**
a) les barres de liaison longitudinales et les bras de barre de liaison forment un angle (α, β) essentiellement identique avec un support longitudinal de châssis de véhicule (3) de la carrosserie du véhicule ;
et/ou
b) les barres de liaison longitudinales (5) s'étendent essentiellement parallèlement à des bras de barre de liaison (32) sous-jacents de la barre de liaison à quatre points (30).

4. Suspension d'essieux selon l'une quelconque des revendications 1 à 3, **caractérisée en ce que** la partie centrale est réalisée sous forme de barre, sous forme cylindrique, sous forme de tige, sous forme tubulaire, sous forme de pièce profilée et/ou sous forme coudée.

5. Suspension d'essieux selon l'une quelconque des revendications précédentes, **caractérisée en ce que** la partie centrale se compose de deux parties qui présentent à chaque fois une surface de bride (106, 107), les surfaces de bride étant connectées de manière solidaire en rotation à une connexion par rivetage ou vissage (108).

6. Suspension d'essieux selon l'une quelconque des revendications précédentes, **caractérisée en ce que** la partie centrale est fabriquée à partir d'un plastique ou au moins en partie à partir d'un plastique, le plastique étant de préférence un plastique renforcé par des fibres de verre ou par des fibres de carbone.

7. Suspension d'essieux selon l'une quelconque des revendications précédentes, **caractérisée en ce que** la partie centrale (131) est réalisée sous forme de cavité fermée qui est réalisée en vue du stockage d'un fluide.

8. Suspension d'essieux selon l'une quelconque des revendications précédentes, **caractérisée en ce que** la partie centrale présente un point de gauchissement de consigne.

9. Barre de liaison à quatre points (100 ; 110) présentant les caractéristiques de la barre de liaison à quatre points (100 ; 110) de la suspension d'essieux (10 ; 20) selon l'une quelconque des revendications précédentes 1 à 8.

10. Véhicule utilitaire comprenant une suspension d'essieux (10) de l'essieu rigide articulé selon l'une quelconque des revendications précédentes 1 à 8.

11. Véhicule utilitaire à quatre essieux comprenant deux essieux avant à suspension pneumatique (5), une suspension d'essieux (10) selon l'une quelconque des revendications précédentes 1 à 8 étant prévue pour chacun des deux essieux avant à suspension pneumatique (5).
